# EUROPEAN PATENT APPLICATION

(11) **EP 1 881 178 A2**
(43) Date of publication of application: **23.01.2008**
(21) Application number: 07252849.0
(22) Date of filing: 18.07.2007
(51) Int. Cl.: F02C 6/18, F02C 7/08

(54) **Use of exhaust in thermal devices**

(30) Priority: 14.11.2006 US 559447; 20.07.2006 US 807877 P
(71) Applicant: Ingersoll-Rand Energy Systems Corporation, Portsmouth, NH 03801-2866 (US)
(72) Inventor: Johnson, Jay, Davidson, NC 28036 (US)
(74) Representative: Neill, Alastair William

(57) **Abstract**

A system to utilize exhaust generated by a fuel consuming device including a plenum situated to receive the exhaust from the fuel consuming device and a stack in fluid communication with the plenum. The stack is adapted to allow the exhaust to exit the plenum in one instance and ambient air to enter the plenum in another instance. The system also includes a thermal device adapted to draw a fluid flow from the plenum for operation of the thermal device. The fluid flow includes at least one of the exhaust from the fuel consuming device and the ambient air.

## Description

This application claims priority under 35 U.S.C. § 119 from U.S. Provisional Application No. 60/807,877, filed July 20, 2006.

### BACKGROUND

The present invention relates to a use of exhaust in thermal devices.

### SUMMARY

In one embodiment, the invention provides a system to utilize exhaust generated by a fuel consuming device. The system includes a plenum situated to receive the exhaust from the fuel consuming device and a stack in fluid communication with the plenum. The stack is adapted to allow the exhaust to exit the plenum in one instance and ambient air to enter the plenum in another instance. The system also includes a thermal device adapted to draw a fluid flow from the plenum for operation of the thermal device. The fluid flow includes at least one of the exhaust from the fuel consuming device and the ambient air.

In some embodiments, the stack allows the ambient air to enter the plenum to supplement the exhaust when the fluid flow needs of the thermal device exceed the exhaust generated by the fuel consuming device.

In some embodiments, the fuel consuming device generating the exhaust is a microturbine engine.

In another embodiment, the invention provides a method to increase efficiency of a thermal device. The method includes generating exhaust with a fuel consuming device, staging the exhaust in a plenum, and monitoring the fluid flow needs of the thermal device. The method also includes supplementing the exhaust with ambient air when the fluid flow needs exceed the exhaust available in the plenum and drawing a fluid flow from the plenum to meet the fluid flow needs of the thermal device. The fluid flow includes at least one of the exhaust generated by the fuel consuming device and the ambient air. The method further includes combusting the fluid flow at the thermal device.

Other aspects of the invention will become apparent by consideration of the detailed description and accompanying drawings.

### BRIEF DESCRIPTION OF THE DRAWINGS

Fig. 1 is a schematic illustration of an exhaust utilization system.

Fig. 2 is a schematic illustration of a microturbine engine for use with the exhaust utilization system of Fig. 1.

### DETAILED DESCRIPTION

Before any embodiments of the invention are explained in detail, it is to be understood that the invention is not limited in its application to the details of construction and the arrangement of components set forth in the following description or illustrated in the following drawings. The invention is capable of other embodiments and of being practiced or of being carried out in various ways. Also, it is to be understood that the phraseology and terminology used herein is for the purpose of description and should not be regarded as limiting. The use of "including," "comprising," or "having" and variations thereof herein is meant to encompass the items listed thereafter and equivalents thereof as well as additional items. Unless specified or limited otherwise, the terms "mounted," "connected," "supported," and "coupled" and variations thereof are used broadly and encompass both direct and indirect mountings, connections, supports, and couplings. Further, "connected" and "coupled" are not restricted to physical or mechanical connections or couplings.

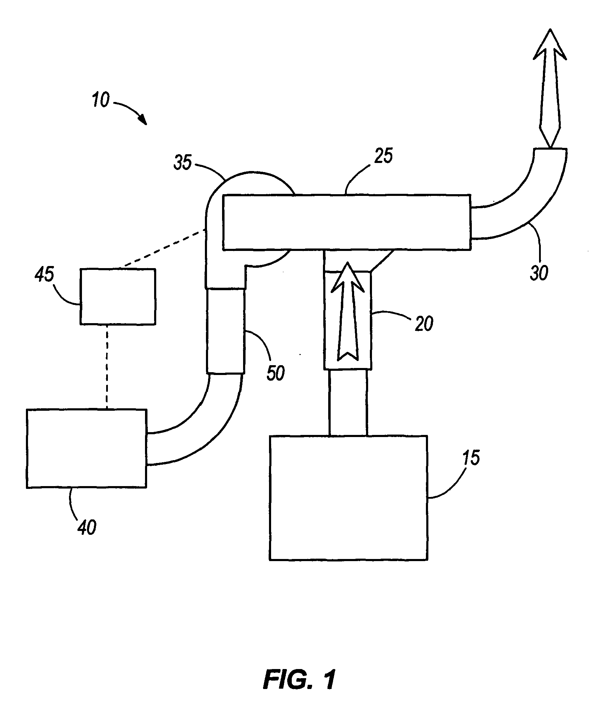

Fig. 1 schematically illustrates an exhaust utilization system 10 for use with a fuel consuming device 15. The exhaust utilization system 10 includes an exhaust pipe 20, a plenum 25, a stack 30, an air mover 35, and a thermal device 40.

The fuel consuming device 15 may be an engine that uses a fuel for doing work. Examples of such engines include reciprocating engines, microturbine engines, and larger gas turbine engines. Examples of work done by such engines include production of electricity, driving chillers, refrigerators, or compressors, and raising, lowering, or otherwise moving objects. Alternatively, the fuel consuming device 15 may be a flare that bums gas extracted from a landfill or other site to reduce the amount of unburned hydrocarbons that are released into the environment. The fuel consuming device 15 generates hot products of combustion or exhaust as a by-product of the work done. The exhaust leaves the fuel consuming device 15 and travels through the exhaust pipe 20 to the plenum 25.

The exhaust pipe 20 may in some embodiments include a one-way conduit (e.g., one including a manual damper or valve, a pressure-actuated damper or valve, etc.) that allows the exhaust to flow from the fuel consuming device 15 to the plenum 25, but prevents the exhaust from re-entering or backflowing into the fuel consuming device 15. Such backflow may be undesirable for causing parts of the fuel consuming device 15 to move or rotate when not in operation.

The plenum 25 is positioned at least several feet above the fuel consuming device 15. Exhaust exits the exhaust pipe 20 and expands in the plenum 25, lowering the exhaust pressure to near or below ambient pressure. Additionally, the plenum 25 is shaped and sized to reduce the velocity of the exhaust. In some embodiments, multiple fuel consuming devices 15, each with a separate exhaust pipe 20, may feed into the plenum 25. The plenum 25 continually fills with exhaust as long as the fuel consuming device 15 is operating. The natural buoyancy of the exhaust gases causes the exhaust to default to a path that takes it up and safely out of the building through the stack 30.

As shown in Fig. 1, the thermal device 40 may be connected in fluid communication with the plenum 25. The thermal device 40 requires a fluid flow to support its operation (e.g., to produce steam or other high temperature fluids). The air mover 35 is positioned on the plenum 25 opposite from the stack 30 and is operable to pull the exhaust, fresh ambient air (i.e., air from the environment), or a mixture of the two from the plenum 25 as the fluid flow. The fluid flow is then directed by the air mover 35 toward the thermal device 40. The plenum 25 provides a buffer to mitigate rapid changes in the volume and temperature of the exhaust available for use by the thermal device 40. In the embodiment shown in Fig. 1, the air mover 35 is a high-temperature blower. In some embodiments, multiple air movers 35 may be coupled to the plenum 25 to supply the fluid flow to separate thermal devices 40 operating at different times or requiring different amounts of fluid flow.

In the thermal device 40, the fluid flow is mixed with fuel and combusted. In other embodiments, the fluid flow may be hot enough to support operation of the thermal device 40 without combustion. A control system 45 monitors the fluid flow and other operational parameters and activates the air mover 35 in response to the thermal device 40 requiring more fluid flow. The control system 45 may monitor, for example, the temperature, flow rate, and oxygen content of the fluid flow. In other embodiments, the control system 45 may monitor the efficiency of the thermal device 40 or a parameter from which the efficiency can be calculated or deduced.

As the needs of the thermal device 40 vary, so will the amount of fluid flow that the air mover 35 pulls from the plenum 25. When the thermal device 40 demands a higher fluid flow than the exhaust being produced by the fuel consuming device 15, the air mover 35 will reduce the plenum pressure, reversing the flow in the stack 30 and drawing in fresh ambient air to supplement the exhaust. In this regard, the stack 30 may be termed a "two-way" conduit because flow is permitted in one instance out of the plenum 25 and in another instance into the plenum 25. The exhaust and fresh ambient air mix in the plenum 25 before being pulled by the air mover 35 towards the thermal device 40. When the thermal device 40 demands a lower fluid flow than the exhaust being produced by the fuel consuming device 15, the excess exhaust flows out the stack 30. When the fuel consuming device 15 is not operating and not producing exhaust, the thermal device 40 only uses fresh ambient air drawn in through the stack 30. In addition to supplementing the volume of the exhaust, some embodiments may draw the fresh ambient air into the plenum 25 to lower the temperature of the exhaust.

In the embodiment shown in Fig. 1, the thermal device 40 is situated apart from the fuel consuming device 15 such that there is no direct communication between the thermal device 40 and the fuel consuming device 15. That is, the needs of the thermal device 40 have no influence over the operation of the fuel consuming device 15. Furthermore, the thermal device 40 includes a one-way inlet 50 having means for permitting fluid flow from the plenum 25 to the thermal device 40, but preventing fluid flow from the thermal device 40 to the plenum 25. Such means may be included in the air mover 35 (in which case a separate one-way inlet 50 element is not required) or in a separate damper, for example. When the thermal device 40 is not operating, the one-way inlet 50 closes so that the exhaust generated by the fuel consuming device 15 can only flow out the stack 30.

The thermal device 40 utilizes a topping cycle, where waste heat or exhaust from generating electricity is used in an alternate process. The thermal device 40 may be a source of thermal energy such as, for example, a boiler producing steam. Combustion efficiency of the boiler increases due to energy saved by using high-temperature air that would normally need to be heated. In one example, the exhaust from the fuel consuming device 15 may be between 450° F and 700° F. The combustion efficiency is raised about 1% for each 40° F that the air is preheated. In other words, a typical boiler which is 80% efficient when using 70° F combustion air can be enhanced to between 90% and 91% efficiency when operating on 500° F exhaust. If the exhaust is hot enough, post firing may not be required at all for the boiler to produce steam.

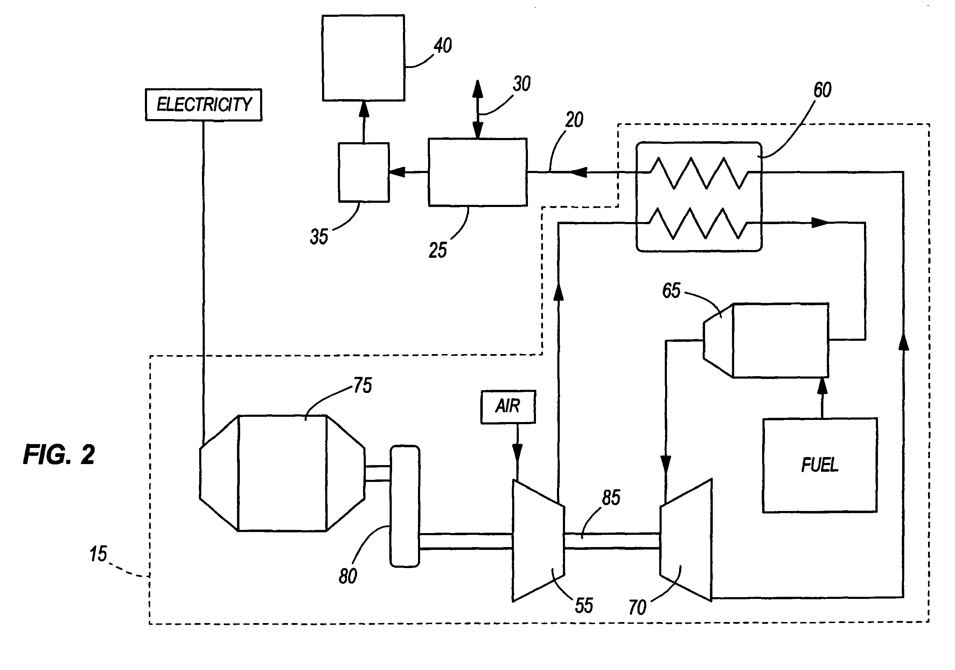

Fig. 2 schematically illustrates one type of fuel consuming device 15 that may be used to generate exhaust. The fuel consuming device 15 of Fig. 2 is a microturbine engine, which is useful in distributed power applications, and can even be mounted on skids and moved between job sites. Microturbine engines 15 usually generate one megawatt of power or less, and are therefore relatively small when compared to power generators in power plants that are on the grid.

The illustrated microturbine engine 15 includes a compressor 55, a recuperator 60, a combustor 65, a power turbine 70, and an electric power generator 75. Air is compressed in the compressor 55 and delivered to a cool side of the recuperator 60. The recuperator 60 may be, for example, a counterflow plate-fin type heat exchanger. The compressed air is preheated within the recuperator 60 and mixed with a gaseous fuel from a fuel supply to create a combustible mixture.

The combustible mixture is combusted in the combustor 65 to create products of combustion. The products of combustion are then permitted to expand through the power turbine 70 to impart rotational energy to the power turbine 70. Rotation of the power turbine 70 drives operation of the electric generator 75 through an optional gearbox 80 to produce electrical power at a useful frequency. In other embodiments, power electronics may be used in place of the gearbox 80 to condition the electrical signal into a useful frequency. In the illustrated microturbine engine 15, the power turbine 70 and compressor 55 are coupled for rotation together via a shaft 85, so rotation of the power turbine 70 also drives rotation of the compressor 55. In other embodiments, the power turbine 70 may only drive the power generator 75, and an additional gasifier turbine may be used to drive the compressor 55. In such embodiments, the products of combustion are expanded through both the power turbine 70 and the gasifier turbine. Prior to exhausting the products of combustion from the microturbine engine 15, they flow into a hot side of the recuperator 60 to preheat the inflowing compressed air.

The still hot products of combustion then flow up through the exhaust pipe 20. A manual or automatic damper may be situated in the exhaust pipe 20 to close the exhaust pipe 20 when the microturbine engine 15 is not in use. This will prevent air from being drawn through the microturbine engine 15 by the air mover 35, which could cause parts to rotate without sufficient lubrication depending on how the microturbine engine 15 is set up.

Microturbines 15 pass about ten times as much combustion air as a traditional piston style engine of similar power output. This leaves the exhaust hot (typically 450° F to 700° F) and rich in oxygen (16% to 18% compared to 23% found in fresh ambient air).
These conditions make the exhaust an excellent source of fluid flow. Not only is the oxygen content very reasonable for supporting combustion (lower oxygen concentrations can actually help reduce the formation of NOx compounds), but, as mentioned above, every degree of temperature above ambient is saving energy that the thermal device 40 would otherwise have to waste in heating the fluid flow.

Thus, the invention provides, among other things, a use of exhaust in thermal devices. Various features and advantages of the invention are set forth in the following claims.
Attention is directed to all papers and documents which are filed concurrently with or previous to this specification in connection with this application and which are open to public inspection with this specification, and the contents of all such papers and documents are incorporated herein by reference.
All of the features disclosed in this specification (including any accompanying claims, abstract and drawings), and/or all of the steps of any method or process so disclosed, may be combined in any combination, except combinations where at least some of such features and/or steps are mutually exclusive.
Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.
The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. A system to utilize exhaust generated by a fuel consuming device, the system comprising:
a plenum situated to receive the exhaust from the fuel consuming device and sized and shaped to reduce the pressure and flow velocity of the exhaust;
a stack in fluid communication with the plenum, the stack adapted to allow the exhaust to exit the plenum in one instance and ambient air to enter the plenum in another instance; and
a thermal device adapted to draw a fluid flow from the plenum for operation of the thermal device, the fluid flow including at least one of the exhaust from the fuel consuming device and the ambient air.

2. The system of claim 1, wherein the stack allows the ambient air to enter the plenum to supplement the exhaust when the fluid flow needs of the thermal device exceed the exhaust generated by the fuel consuming device.

3. The system of claim 1, further comprising a conduit to allow the exhaust to travel from the fuel consuming device to the plenum, the conduit including a mechanism to selectively close the conduit.

4. The system of claim 1, further comprising an air mover, the air mover operable to move the exhaust from the plenum toward the thermal device.

5. The system of claim 4, wherein the air mover is a high-temperature blower.

6. The system of claim 1, wherein the thermal device is a boiler.

7. The system of claim 1, further comprising a one-way inlet, the one-way inlet positioned between the plenum and the thermal device and operable to close, wherein closing the one-way inlet disconnects the thermal device from the plenum.

8. The system of claim 1, further comprising a controller, wherein the controller controls the air mover based on the fluid flow needs of the thermal device.

9. A system comprising:
a microturbine engine capable of producing exhaust, the microturbine engine including
a compressor operable to produce a flow of compressed air,
a fuel pump operable to deliver a flow of fuel,
a recuperator in fluid communication with the compressor to receive the flow of compressed air, the flow of compressed air being preheated within the recuperator to produce a flow of preheated compressed air,
a combustor receiving the flow of preheated compressed air and the flow of fuel, the combustor combusting the flow of preheated compressed air and the flow of fuel to produce a flow of products of combustion,
a power turbine driven by the flow of products of combustion from the combustor, the flow of products of combustion exiting the power turbine as the exhaust, and
an electric power generator coupled to the turbine, the electric power generator driven by the turbine to output an electrical power;
a plenum situated to receive the exhaust from the microturbine engine and sized and shaped to reduce the pressure and flow velocity of the exhaust;
a stack in fluid communication with the plenum, the stack adapted to allow the exhaust to exit the plenum in one instance and ambient air to enter the plenum in another instance; and
a thermal device adapted to draw a fluid flow from the plenum for operation of the thermal device, the fluid flow including at least one of the exhaust from the fuel consuming device and the ambient air.

10. The system of claim 9, wherein the stack allows the ambient air to enter the plenum to supplement the exhaust when the fluid flow needs of the thermal device exceed the exhaust generated by the fuel consuming device.

11. The system of claim 9, further comprising a conduit to allow the exhaust to travel from the microturbine engine to the plenum, the conduit including a mechanism to selectively close the conduit.

12. The system of claim 9, further comprising an air mover, the air mover operable to move the exhaust from the plenum toward the thermal device.

13. The system of claim 12, wherein the air mover is a high-temperature blower.

14. The system of claim 9, wherein the thermal device is a boiler.

15. The system of claim 9, further comprising a one-way inlet, the one-way inlet positioned between the plenum and the thermal device and operable to close, wherein closing the one-way inlet disconnects the thermal device from the plenum.

16. The system of claim 9, further comprising a controller, wherein the controller controls the air mover based on the fluid flow needs of the thermal device.

17. A method to increase efficiency of a thermal device, the method comprising:
generating exhaust with a fuel consuming device;
staging the exhaust in a plenum to reduce the pressure and flow velocity of the exhaust;
monitoring fluid flow needs of the thermal device;
supplementing the exhaust with ambient air when the fluid flow needs exceed the exhaust available in the plenum;
drawing a fluid flow from the plenum to meet the fluid flow needs of the thermal device, the fluid flow including at least one of the exhaust generated by the fuel consuming device and the ambient air; and
combusting the fluid flow at the thermal device.

18. The method of claim 17, wherein generating the exhaust includes generating the exhaust with a microturbine engine.

19. The method of claim 17, wherein supplementing the exhaust with the ambient air includes drawing the ambient air into the plenum.

20. The method of claim 19, wherein drawing the ambient air into the plenum includes drawing the ambient air through a stack.

21. The method of claim 17, wherein drawing the fluid flow from the plenum includes drawing the fluid flow with an air mover from the plenum and directing the fluid flow toward the thermal device.

22. The method of claim 21, wherein drawing the fluid flow with the air mover includes drawing the fluid flow with a high-temperature blower.

23. The method of claim 19, wherein combusting the fluid flow at the thermal device includes combusting the fluid flow at a boiler.
